# EUROPEAN PATENT APPLICATION

(11) **EP 3 961 793 A1**
(43) Date of publication of application: **02.03.2022**
(21) Application number: 21386055.4
(22) Date of filing: 20.08.2021
(51) Int. Cl.: H01M 16/00, H01M 10/0525, H01G 11/08, H01M 50/204, H01M 10/42, H01M 10/48

(54) **ELECTRIC DC ACCUMULATOR CONSISTING OF DIFFERENT ENERGY SOURCES**

(30) Priority: 26.08.2020 GR 20200100516
(71) Applicant: Grigoriadis, Ioannis, 64100 Eleytheroupoli (GR)
(72) Inventor: Grigoriadis, Ioannis, 64100 Eleytheroupoli (GR)

(57) **Abstract**

An accumulator comprising: two terminals which are the positive and negative terminals; an internal battery consisting of an array of lithium cells (Li-Ion or LiFeP04), with an electronic battery management-monitoring unit (BMS), the internal battery being connected in parallel between the positive and negative terminals; an array of supercapacitors with an electronic management-monitoring unit, the array of supercapacitors being electrically connected in parallel between the positive and negative terminals.

## Description

The present invention relates to a novel type of accumulators for use in various applications such as starting motors (compression ignition and spark ignition), AC photovoltaic installations, etc.

All known types of batteries are based on the electrochemical reaction of a lead-acid cell (hereinafter referred to as "lead battery"). All types of lead batteries contain lead as electrodes and H2SO4 sulfuric acid solution as electrolyte and a chemical process takes place during discharge and charging. The different types of lead batteries differ only in the construction of cells (shape and method of making electrodes, shape of cells, degreasing channels, valves, lead paste material that reduces lead consumption during construction, separators, electrolyte additives, etc.). None of the currently known types is completely hermetically sealed, the partial release of substances contained in the battery into the environment is always compatible during operation. With the most modern types, called AGM and gel batteries, this phenomenon can only occur when the battery is overcharged. All known types contain toxic (lead Pb) and hazardous (sulfuric acid solution H2SO4) substances within the meaning of Directive 2002/95 / EC, RoHS.

Modern known Lithium (Li) batteries such as Li-Ion, Li-Pol and LiFePo4 are not capable of supplying or receiving high currents and are not capable of supplying or receiving energy efficiently at temperatures below -20 ° C.

### Lithium ion accumulators (Li-Ion)

They come from primary lithium cells. The positive electrode consists of the compound of lithium oxides and another metal (usually lithium oxide or cobalt Li2O, Co2O3), the negative is carbon mixed with other chemicals and the ester compound is the electrolyte, they have a nominal voltage of 3.7 V. These can not be charged and discharged with high current and the disadvantage is the need to protect the power of the individual cells during charging and discharging. The final voltage during charging must not be exceeded and discharge threshold a certain limit must be avoided, which is the job of the protection-management circuits of each cell (BMS). The operating conditions of Li-Ion batteries, when stored for a long time, require them to be charged at least once a year to prevent them from being discharged below a certain limit, as the battery discharges automatically.

### Lithium iron phosphate (LiFePO4) accumulators

It is a type of lithium-ion battery that uses LiFePO4 as the cathode material, and a carbon graphite electrode with metal support as the anode. The LiFePO4 battery has a lower operating voltage of 3.2V than the corresponding Li-Ion. Due to low cost, low toxicity, clearly defined performance, long-term stability, etc. LiFePO4 finds various roles for use in vehicles, as backup power etc.

### Supercapacitors

The supercapacitor is an electrolytic capacitor made with special technology, aiming to reach a high capacity of thousands of farads, while maintaining the characteristics of the capacitor, especially the ability to quickly charge and discharge. The capacitance of the capacitor is directly proportional to the surface of the electrodes and indirectly proportional to the distance of the electrodes (charges). The electrodes of the supercapacitor are made of powdered carbon, which is deposited on foil. The result is a polarized capacitor with very high capacitance and very low resistance, suitable for fast supply and storage of electricity. The electrical parameters of supercapacitors are comparable to the parameters of electrochemical sources (batteries - accumulators). The energy stored in the supercapacitor is 10 times higher than the energy stored in a common capacitor. Low internal resistance allows fast discharge. The power supply that can be provided by the supercapacitor reaches the values of Kw / kg weight of the supercapacitor. The electrical parameters of the capacitor are maintained even at low temperatures up to -40 ° C.

The problems solved by the present invention are: the high toxicity, overweight, slow charging rate of standard lead acid batteries. The problem of premature aging of these batteries when undergoing deep discharges is addressed, as well as continuous high current requirements from starting an internal combustion engine (with or without start-stop function) or from inverter operation in photovoltaic power plants. This invention allows the repair - replacement - upgrade of components within the device by an experienced technician.

Problems with standard lead-acid batteries include the use of corrosive acid and high concentrations of toxic lead as components. These batteries often leak acid and create acid corrosion that destroys the components. Typical lead batteries have a short life cycle and are slow to charge and extremely heavy. Excess weight of lead acid batteries increases the cost of transport fuel on the market and storage costs.

Due to the nature of the capacitors and the internal equivalent series resistance (ESR) they have, to maintain the charging voltage it is necessary to use a battery.

The present invention relates to a new type of battery accumulator, which is based on a suitable (serial or parallel) electrical connection of Lithium battery components (Li-Ion or LiFePO4) and supercapacitors in combination with the use of electronic control and management modules (BMS) of Lithium cells and these supercapacitors. This invention is concerned with finding a suitable alternative to existing lead batteries. The battery according to this invention is a new type of connection of known components, achieving better quantitative and qualitative characteristics than existing lead batteries.

The principle of the new accumulator battery lies in the proper (serial or parallel) electrical connection of Li-Ion or LiFePO4 cells and supercapacitor arrays, in order to eliminate existing disadvantages of lead accumulators. By permanently connecting these components to a solid complex, the desired characteristics are ensured (internal resistance size, thermal conductivity, heat dissipation, electrical conductivity of connection conductors and terminals, electrical insulation and mechanical stability and stability of placement of individual components) operating in any environmental conditions (excessive humidity, corrosion elements in the atmosphere, oxidation of joints, etc.). This makes maximum use of advantageous Li-Ion or LiFePO4 batteries such as high battery capacity, fast charging capacity, power supply even if deeply discharged, relatively low internal resistance and the ability to supply power without being affected by the environment. Supercapacitors are used for their ability to provide, in the short term - instantaneous, high-intensity current without heat loss, have a low internal resistance thanks to which they provide high energy efficiency, can be charged by all types and types of batteries or by connected suitable DC power supply or a vehicle alternator in which they are installed in a very short time.

When a high discharge current is required, this is mainly provided by the capacitors. Li-Ion or Li-Pol or LiFePO4 cells are not overcharged due to internal resistors, connection wires, individual junction terminals and the control module.

This new type of battery accumulator can be discharged with short-term current, reaching at least the value of 1000A, always in correspondence with the selected elements of supercapacitors in terms of quality and characteristics.

At temperatures below -20 ° C, where the maximum discharge current of the Li-Ion or LiFePO4 cells is reduced to the value reached at 20 ° C, the array of supercapacitors is capable of providing a sufficient amount of current and thus the battery functionality is guaranteed at temperatures up to -40 ° C. In terms of discharge levels this type of accumulator is able to supply currents up to 20 times the value of the rated capacity of Li-Ion or LiFePO4 cells, even if discharged deep due to the array of supercapacitors.

The main advantages of the present invention:
The new type of accumulator does not contain lead, sulfuric acid solution or other dangerous or toxic substances within the meaning of RoHS Directive 2002/95 / EC in non-binding form and is therefore environmentally friendly.
The new type of battery can be used in a wider range of operating temperatures (-40 to + 60 ° C).

Due to the composition of the battery and the combination of Li-Ion or LiFePO4 cells and supercapacitors, it is lighter and smaller in size than lead-acid batteries. The density of the stored energy, of the above combination, and depending on the selected elements and the application, starts from 150 Wh / dm3 while the lead accumulators usually have 50 Wh / dm3.

Due to the construction of Li-Ion or LiFePO4 cells and supercapacitors, it is much more resistant to damage and vibration.

Due to the fact that supercapacitors are in operation, it is possible to provide higher current in the short term over a full range of operating temperatures.

The choice of the types and the number of used elements - Li-Ion or LiFePO4 cells as well as the corresponding supercapacitors depends on the application on which the new battery will be used as well as the special characteristics that we want to give to it as it is. the operating voltage the capacitance in Ah, instantaneous current intensity, weight, volume etc.

Due to the choice of components - Li-Ion or LiFePO4 cells as well as the corresponding supercapacitors, it is necessary to use an electronic control and protection control unit (BMS) of these components in terms of charging and discharging, operating temperature, voltage balance between same items that are in a series connection. The real-time transmission of real-time operation information to the user, the new battery, is made possible by the selection of BMS corresponding capabilities that already exist in global use and in the global market, in order to manage it remotely with appropriate applications and programs.

Charging of the new battery can be done by connecting a suitable DC power supply (charger) or a vehicle alternator with a parallel connection. The electronic control-monitoring modules regulate the charging process to a specific voltage as required by each embodiment of this invention. If the voltage is higher than the threshold voltage, the charge is terminated. The protection circuits in the array of capacitors regulate the charge evenly between the components of the supercapacitors.

### Brief description of drawings and images

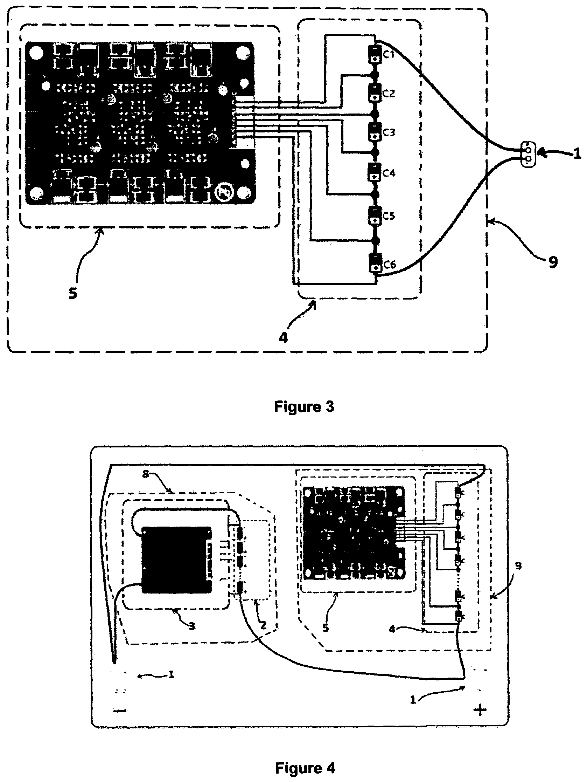

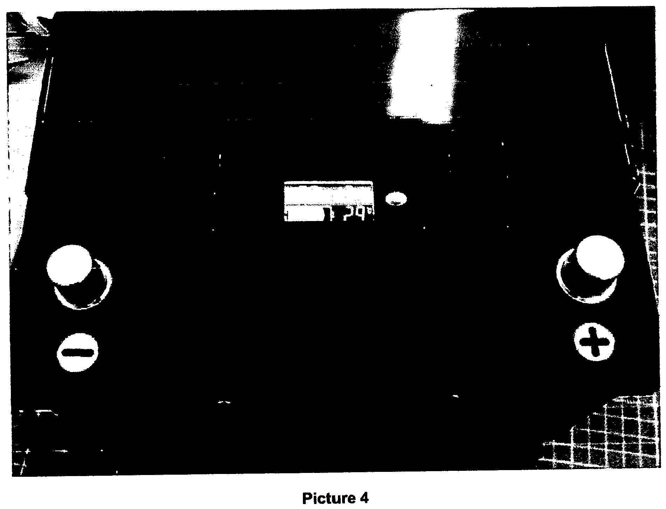

In order to better understand the invention, a method of carrying it out by way of nonlimiting example will be described with reference to the accompanying drawings and illustrations:

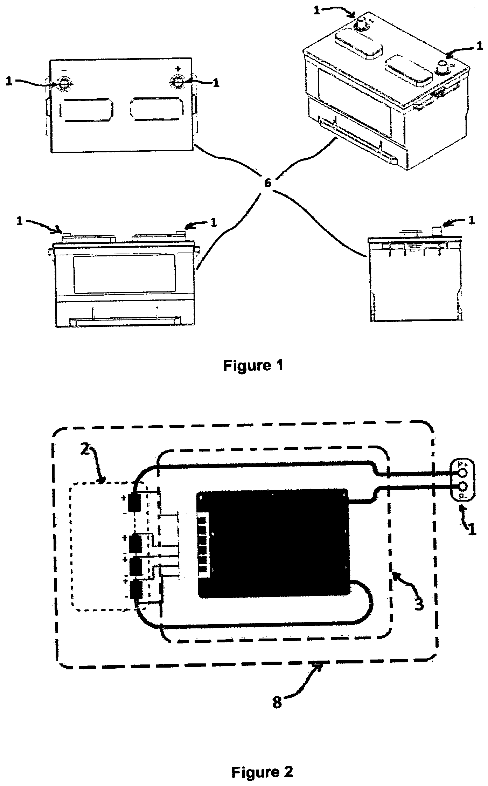

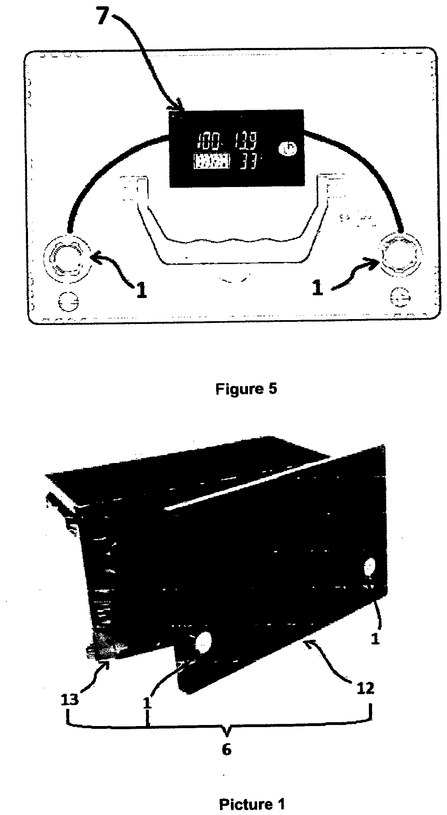

- Figure 1: It is a waterproof battery case (6), in which is the new type of battery, whose dimensions are in accordance with the standard DIN, JIS, BCI, SAE of vehicle lead batteries on a case by case basis. The poles (1) of the new accumulator should be placed in the upper housing in dimensions and position in accordance with the standard according to DIN, JIS, BCl, SAE of vehicle battery batteries and depending on the application.

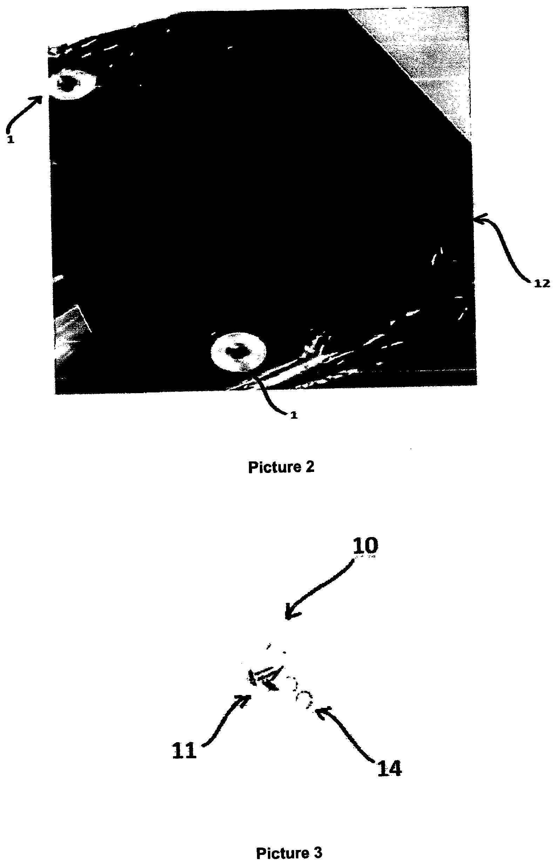

- Figure 2: is the internal battery (9) consisting of an array of lithium cells (Li-Ion or LiFePO4) (2) and has an electronic battery management-monitoring unit (BMS) (3) which can send information and operating data of the battery wirelessly, using a mobile network, to the battery user who will be able to select how it works interactively with commands.
- Figure 3: is the internal array of supercapacitors (9) consisting of components of supercapacitors (4) and electronic control-monitoring unit (5), electrically connected in parallel between the positive and negative poles (1).
- Figure 4: is the connection of the internal battery (8) and the internal array of supercapacitors (9) to the poles (1) in the case (6).
- Figure 5: is the display connection of multiple indications - information (7) with the poles (1).
- Picture 1: It is the case (6) which consists of the upper (12) and lower (13) housing. The internal battery (8) and the internal array of supercapacitors (9) are housed inside the lower housing (13).
- Pictures 2: and 3 The upper housing (12) of the case (6), which is mounted above the lower housing (13), bearing the apparatus of the invention. The output 2 conductors of both the internal battery (8) and the supercapacitor array (9) are mounted with suitable terminals (10), bolts (11) and washers (14) in connection with the bottom of the poles (1) (as Figure 4) having an internal thread corresponding to the screws.
- Picture 4: It is the multi-display - information screen (7) mounted on the upper housing of the device case (6).

## Claims

1. The layout of the new energy accumulator includes:
a. Two terminals which are the positive and negative terminals (1).
b. An internal battery (8) consisting of an array of lithium cells (2) (Li-Ion or LiFePO4), with electronic battery management-monitoring unit (BMS) (3), the internal battery is connected in parallel between the positive and negative poles (1).
c. An array of supercapacitors (9) consisting of components of a supercapacitor (4) with an electronic management-monitoring unit (5), is electrically connected in parallel between the positive and negative poles (1).
